# EUROPÄISCHE PATENTSCHRIFT

(11) **EP 1 295 759 B1**
(45) Veröffentlichungstag und Bekanntmachung des Hinweises auf die Patenterteilung: **09.11.2005**
(21) Anmeldenummer: 02019786.9
(22) Anmeldetag: 04.09.2002
(51) Int. Cl.: B60R 21/01, B60R 22/48

(54) **Flurförderzeug mit einem Sicherheitsgurt**
Industrial truck with safety belt
Chariot de manutention avec ceinture de sécurité

(30) Priorität: 21.09.2001 DE 10146627
(43) Veröffentlichungstag der Anmeldung: 26.03.2003
(73) Patentinhaber: STILL GMBH, D-22113 Hamburg (DE)
(72) Erfinder: Fromme, Georg Dr., 22145 Hamburg (DE); Neuf, Ottmar, 21465 Reinbek (DE); Hilgers, Willi Dr., 72124 Plietzhausen (DE)
(74) Vertreter: Lang, Michael

(56) Entgegenhaltungen:
- DE-A- 19 717 622
- DE-A- 19 946 094
- FR-A- 2 789 950
- US-A- 3 864 668
- US-A- 4 856 612
- US-B1- 6 260 650

## Beschreibung

Die Erfindung betrifft ein Flurförderzeug mit einem Fahrersitz und einem dem Fahrersitz zugeordneten Sicherheitsgurt, der ein Gurtschloss und einen den Zustand des Gurtschlosses erfassenden Gurtschlosssensor aufweist, wobei der Gurtschlosssensor mit einer Steuereinheit des Flurförderzeugs in Wirkverbindung steht und zusätzlich ein die Anwesenheit einer Person auf dem Fahrersitz erfassender Anwesenheitssensor mit der Steuereinheit in Wirkverbindung steht, die derart ausgeführt ist, dass der Zustand und/oder Änderungen der von dem Gurtschlosssensor und dem Anwesenheitssensor erzeugten Signale in der Steuereinheit fortlaufend erfasst und ausgewertet werden, wobei die Steuereinheit mindestens einen Signalausgang aufweist, der in Abhängigkeit von dem Ergebnis der Auswertung der Signale eine korrekte oder eine falsche Verwendung des Sicherheitsgurts meldet.

Flurförderzeuge mit Fahrersitz, insbesondere Gabelstapler, sind in der Regel mit einem als Beckengurt ausgeführten Sicherheitsgurt ausgerüstet. Zweck des Sicherheitsgurts ist es, die Bedienperson des Flurförderzeugs in Unfallsituationen auf dem Fahrersitz zu halten. Eine besonders gefährliche Unfallsituation stellt das Umkippen eines Gabelstaplers dar, da hierbei die Gefahr besteht, dass die Bedienperson aus der offenen Fahrerkabine fällt und anschließend am Boden von Teilen der Fahrerkabine eingeklemmt wird. Ein Anlegen des Sicherheitsgurts kann diese Unfallsituation deutlich entschärfen, da der Sicherheitsgurt ein Herausfallen aus der Fahrerkabine sicher verhindert.

Diesem Sachverhalt zum Trotz und entgegen geltender Sicherheitsvorschriften legen die Bediener von Flurförderzeugen den Sicherheitsgurt in der Praxis häufig nicht an. Als Grund hierfür wird angesehen, dass die Bedienpersonen das Schließen und Öffnen des Sicherheitsgurts als lästig empfinden, insbesondere, wenn in bestimmten Einsatzfällen, z.B. im Kommissionierbetrieb, die Bedienperson das Flurförderzeugs wiederholt verlassen muss.

Um die Bedienpersonen zum Anlegen des Sicherheitsgurts zu bewegen, ist es bekannt, den Zustand des Gurtschlosses des Sicherheitsgurts mit einem Gurtschlosssensor zu überwachen und gegebenenfalls automatisch einen Warnton oder ein Warnlicht einzuschalten, wenn dass Gurtschloss während eines Betriebs des Flurförderzeugs geöffnet ist. Diese Warnfunktion wird von Bedienpersonen des Flurförderzeugs jedoch häufig dadurch außer Kraft gesetzt, dass in die am Fahrersitz befindliche Buchse des Gurtschlosses ein Duplikat der an dem Gurt befindlichen Lasche des Gurtschlosses eingesteckt wird, oder dass der Gurt um die Rückseite des Fahrersitzes herumgeführt und dann das Gurtschloss geschlossen wird.

Beispielsweise aus der US 4 856 612 A ist es für einen Radlader bekannt, dass

zusätzlich ein die Anwesenheit einer Person auf dem Fahrersitz erfassender Anwesenheitssensor mit der Steuereinheit in Wirkverbindung steht. Neben dem Zustand des Gurtschlosses wird mittels des Anwesenheitssensors ebenfalls überwacht, ob eine Person auf dem Fahrersitz sitzt. Durch Verknüpfung der Signale des Anwesenheitssensors und des Gurtschlosssensors in der Steuereinheit kann eine missbräuchliche Benutzung des Gurtschlosses erkannt werden. Die Steuereinheit ist derart ausgeführt, dass der Zustand und/oder Änderungen der von dem Gurtschlosssensor und dem Anwesenheitssensor erzeugten Signale in der Steuereinheit fortlaufend erfasst und ausgewertet werden.

Die korrekte Benutzung des Sicherheitsgurts wird somit fortlaufend während der Benutzung des Flurförderzeugs, insbesondere während jedes Auf- und Absteigens der Bedienperson überprüft. Die Steuereinheit weist darüber hinaus einen Signalausgang auf, der in Abhängigkeit von dem Ergebnis der Auswertung der Signale eine korrekte oder eine falsche Verwendung des Sicherheitsgurts meldet. Über den Signalausgang können in Abhängigkeit von einer korrekten oder falschen Verwendung des Sicherheitsgurts beispielsweise akustische oder optische Warneinrichtungen aktiviert oder bestimmte Funktionen des Flurförderzeugs beeinflusst werden. Der Signalausgang kann beispielsweise als physisch vorhandene Ausgangsschnittstelle ausgebildet sein. Ebenso möglich ist es, dass der Signalausgang als innerhalb der Steuereinheit abgeschlossener elektrischer Leiter ausgebildet ist, wenn das Signal des Signalausgangs direkt in der Steuereinheit weiterverarbeitet wird.

Der vorliegenden Erfindung liegt die Aufgabe zugrunde, ein auf die Bedürfnisse in Flurförderzeugen zugeschnittenes System zum Überwachen des Anlegens des Sicherheitsgurts zur Verfügung zu stellen.

Diese Aufgabe wird erfindungsgemäß dadurch gelöst, dass die Steuereinheit parametrierbar ausgeführt ist, so dass verschiedene Verfahren zur Auswertung der Signale des Gurtschlosssensors und des Anwesenheitssensors einstellbar sind und so dass verschiedene Arten der Benutzungseinschränkung des Flurförderzeugs im Falle einer falschen Verwendung des Sicherheitsgurts einstellbar sind, wobei dann, wenn der Signalausgang ein Nichtanlegen des Sicherheitsgurts meidet, ein Fahrbetrieb des Flurförderzeugs gesperrt wird oder ein Fahrbetrieb des Flurförderzeugs nur mit reduzierter Höchstgeschwindigkeit ermöglicht wird und dann, wenn der Signalausgang ein manipulatorisches Schließen des Gurtschlosses meldet, ein Dauer-Warnsignal erzeugt wird.

Durch die Parametrierbarkeit der Steuereinheit können verschiedene Auswerteverfahren und Arten der Benutzungseinschränkung entsprechend den jeweiligen Einsatzbedingungen und Kundenanforderungen implementiert werden. Wenn bei Nichtanlegen des Sicherheitsgurts der Fahrbetrieb des Flurförderzeugs gesperrt wird, ist sichergestellt, dass das Flurförderzeug nur bei korrekt angelegtem Sicherheitsgurt betrieben werden kann. Altemativ kann bei Nichtanlegen des Sicherheitsgurts ein Fahrbetrieb des Flurförderzeugs nur mit reduzierter Höchstgeschwindigkeit ermöglicht werden. Dabei kann das Flurförderzeug auch bei nicht angelegtem Sicherheitsgurt betrieben werden, jedoch nur mit derart geringen Geschwindigkeiten, dass ein Umkippen des Flurförderzeugs sicher verhindert ist. Wenn der Signalausgang ein manipulatorisches Schließen des Gurtschlosses meldet, wird beispielsweise nach einer Verzögerungszeit ein Wamton erzeugt, der nur von besonders berechtigten Personen abgeschaltet werden kann.

Gemäß einer ersten Ausgestaltung der erfindungsgemäßen Steuereinheit meldet bei einem die Anwesenheit einer Person signalisierenden Anwesenheitssensor der Signalausgang dann eine korrekte Verwendung des Sicherheitsgurts, wenn gleichzeitig der Gurtschlosssensor ein geschlossenes Gurtschloss signalisiert. Es wird also überwacht, dass bei der Anwesenheit einer Bedienperson das Gurtschloss geschlossen ist.

Darüber hinaus wird bei einem das Aufstehen einer Person von dem Fahrersitz signalisierenden Anwesenheitssensor vom Signalausgang dann eine korrekte Verwendung des Sicherheitsgurts gemeldet, wenn kurzzeitig vorher der Gurtschlosssensor ein Lösen des Gurtschlosses signalisiert hat. Es wird also überwacht, ob vor dem Aufstehen der Bedienperson das Gurtschloss geöffnet wurde. Falls dies nicht der Fall ist, geht die Steuereinheit davon aus, dass das Gurtschloss missbräuchlich, z.B. mit einem Duplikat der zum Gurtschloss gehörenden Lasche, geschlossen ist.

Bei einem das Hinsetzen einer Person auf den Fahrersitz signalisierenden Anwesenheitssensor meldet der Signalausgang dann eine korrekte Verwendung des Sicherheitsgurts, wenn gleichzeitig der Gurtschlosssensor ein geöffnetes Gurtschloss signalisiert. Hierbei wird davon ausgegangen, dass sich die Bedienperson nur dann auf den Fahrersitz setzen kann, wenn der Gurt geöffnet ist. Wenn sich eine Bedienperson dennoch hinsetzt, geht die Steuereinheit wiederum davon aus, dass das Gurtschloss missbräuchlich geschlossen ist.

Zweckmäßigerweise ist die Steuereinheit derart ausgeführt, dass kurzzeitige Entlastungen des Anwesenheitssensors bei der Auswertung unberücksichtigt bleiben. Wenn der Fahrer z.B. beim Überfahren von Schwellen oder bei einem nach vorne Beugen zum Beobachten der Last den Fahrersitz kurzzeitig entlastet, wird dies durch einen geeigneten Filter ausgeblendet.

Weitere Vorteile und Einzelheiten der Erfindung werden anhand des in der schematischen Figur dargestellten Ausführungsbeispiels näher erläutert.

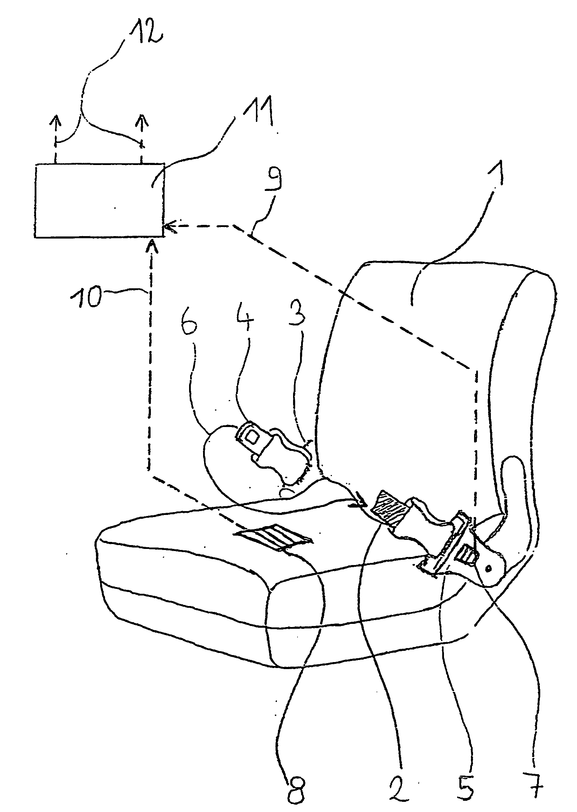

Die Figur zeigt einen Fahrersitz 1 eines erfindungsgemäßen Flurförderzeugs, der mit einem als Beckengurt ausgeführten Sicherheitsgurt 2 ausgestattet ist. Der Sicherheitsgurt umfasst ein Gurtband, eine Spule 3, auf der das Gurtband aufgewickelt ist sowie ein Gurtschloss, welches eine am Ende des Gurtbands befestigte Lasche 4 und eine am Fahrersitz befestigte Buchse 5 umfasst. Zum Schließen des Sicherheitsgurts wird die Lasche 4 in Pfeilrichtung 6 um das Becken einer auf dem Fahrersitz 1 sitzenden Bedienperson gelegt und in der Buchse 5 des Gurtschlosses eingerastet.

Erfindungsgemäß ist der Fahrersitz mit einem Gurtschlosssensor 7 und einem Anwesenheitssensor 8 für die Bedienperson ausgerüstet. Beide Sensoren 7, 8 sind über Signalleitungen 9, 10 mit einer elektronischen Steuereinheit 11 verbunden, in der die Signale des Gurtschlosssensors 7 und des Anwesenheitssensors 8 ausgewertet werden. Die Auswertung wird insbesondere daraufhin durchgeführt, ob eine korrekte Verwendung des Sicherheitsgurts 2 vorliegt. Hiermit soll insbesondere überprüft werden, ob eine auf dem Fahrersitz 1 sitzende Person den Sicherheitsgurt 2 benutzt und ob dabei der Sicherheitsgurt 2 um das Becken der Bedienperson gelegt ist. Der Gurtschlosssensor 7 kann als einfacher elektrischer Schalter ausgeführt sein. Für den Anwesenheitssensor 8 kann auf zu diesem Zweck bekannte Sensoren zurückgegriffen werden, die beispielsweise auf Basis einer Gewichtserfassung oder einer Induktivitätsmessung funktionieren. Neben dem Gurtschlosssensor 7 und dem Anwesenheitssensor können weitere im Flurförderzeug vorhandene Informationen, z.B. die Stellung eines Schaltschlosses oder die Stellung eines Fahrpedals in der Steuereinheit als Eingangsgrößen berücksichtigt werden.

Die elektronische Steuereinheit 11 weist einen oder mehrere Signalausgänge 12 auf, mit denen das Ergebnis der Auswertung wiedergegeben wird. Die Signalausgänge 12 können beispielsweise wiedergeben, ob eine korrekte Benutzung des Sicherheitsgurts 2 vorliegt, oder nicht. Im Fall der nicht korrekten Benutzung kann weiter differenziert werden, ob der Sicherheitsgurt 2 einfach nicht angelegt wurde, oder ob eine gezielte Manipulation vorliegt. In Abhängigkeit vom Ergebnis dieser Auswertung werden dann über die Signalausgänge 12 gegebenenfalls Warneinrichtungen eingeschaltet oder bestimmte Funktionen des Flurförderzeugs gesperrt.

## Patentansprüche

1. Flurförderzeug mit einem Fahrersitz (1) und einem dem Fahrersitz (1) zugeordneten Sicherheitsgurt (2), der ein Gurtschloss und einen den Zustand des Gurtschlosses erfassenden Gurtschlosssensor (7) aufweist, wobei der Gurtschlosssensor (7) mit einer Steuereinheit (11) des Flurförderzeugs in Wirkverbindung steht und zusätzlich ein die Anwesenheit einer Person auf dem Fahrersitz (1) erfassender Anwesenheitssensor (8) mit der Steuereinheit (11) in Wirkverbindung steht , die derart ausgeführt ist, dass der Zustand und/oder Änderungen der von dem Gurtschlosssensor (7) und dem Anwesenheitssensor (8) erzeugten Signale in der Steuereinheit (11) fortlaufend erfasst und ausgewertet werden, wobei die Steuereinheit (11) mindestens einen Signalausgang (12) aufweist, der in Abhängigkeit von dem Ergebnis der Auswertung der Signale eine korrekte oder eine falsche Verwendung des Sicherheitsgurts (2) meldet, **dadurch gekennzeichnet, dass** die Steuereinheit (11) parametrierbar ausgeführt ist, so dass verschiedene Verfahren zur Auswertung der Signale des Gurtschlosssensors und des Anwesenheitssensors einstellbar sind und so dass verschiedene Arten der Benutzungseinschränkung des Flurförderzeugs im Falle einer falschen Verwendung des Sicherheitsgurts (2) einstellbar sind, wobei dann, wenn der Signalausgang (12) ein Nichtanlegen des Sicherheitsgurts (2) meldet, ein Fahrbetrieb des Flurförderzeugs gesperrt wird oder ein Fahrbetrieb des Flurförderzeugs nur mit reduzierter Höchstgeschwindigkeit ermöglicht wird und dann, wenn der Signalausgang (12) ein manipulatorisches Schließen des Gurtschlosses meldet, ein Dauer-Warnsignal erzeugt wird.

2. Flurförderzeug nach Anspruch 1, **dadurch gekennzeichnet, dass** bei einem die Anwesenheit einer Person signalisierenden Anwesenheitssensor (8) der Signalausgang (12) dann eine korrekte Verwendung des Sicherheitsgurts (2) meldet, wenn gleichzeitig der Gurtschlosssensor (7) ein geschlossenes Gurtschloss signalisiert.

3. Flurförderzeug nach Anspruch 1 oder 2, **dadurch gekennzeichnet, dass** bei einem das Aufstehen einer Person von dem Fahrersitz (1) signalisierenden Anwesenheitssensor (8) der Signalausgang (12) dann eine korrekte Verwendung des Sicherheitsgurts (2) meldet, wenn kurzzeitig vorher der Gurtschlosssensor (7) ein Lösen des Gurtschlosses signalisiert hat.

4. Flurförderzeug nach einem der Ansprüche 1 bis 3, **dadurch gekennzeichnet, dass** bei einem das Hinsetzen einer Person auf den Fahrersitz (1) signalisierenden Anwesenheitssensor (8) der Signalausgang (12) dann eine korrekte Verwendung des Sicherheitsgurts (2) meldet, wenn gleichzeitig der Gurtschlosssensor (7) ein geöffnetes Gurtschloss signalisiert.

5. Flurförderzeug nach einem der Ansprüche 1 bis 4, **dadurch gekennzeichnet, dass** die Steuereinheit (11) derart ausgeführt ist, dass kurzzeitige Entlastungen des Anwesenheitssensors bei der Auswertung unberücksichtigt bleiben.

## Claims

1. Industrial truck with a driver's seat (1) and a safety belt (2) which is assigned to the driver's seat (1) and has a belt buckle and a belt buckle sensor (7) which detects the state of the belt buckle, the belt buckle sensor (7) being operatively connected to a control unit (11) of the industrial truck and, in addition, a presence sensor (8) which detects the presence of a person in the driver's seat (1) being operatively connected to the control unit (11) which is designed in such a manner that the state and/or changes of the signals generated by the belt buckle sensor (7) and the presence sensor (8) are continuously detected and evaluated in the control unit (11), the control unit (11) having at least one signal output (12) which, as a function of the result of the evaluation of the signals, indicates a correct or an incorrect use of the safety belt (2), **characterized in that** the control unit (11) is designed in a manner such that it can be parameterized, thus enabling various methods for evaluating the signals of the belt buckle sensor and of the presence sensor to be set and thus enabling various ways of limiting the use of the industrial truck in the event of an incorrect use of the safety belt (2) to be set, in which case, if the signal output (12) indicates that the safety belt (2) has not been put on, a driving operation of the industrial truck is blocked or a driving operation of the industrial truck is permitted only at a reduced maximum speed, and, if the signal output (12) indicates a manipulatory closing of the belt buckle, a permanent warning signal is generated.

2. Industrial truck according to Claim 1, **characterized in that**, in the case of a presence sensor (8) signalling the presence of a person, the signal output (12) indicates a correct use of the safety belt (2) if at the same time the belt buckle sensor (7) signals a closed belt buckle.

3. Industrial truck according to Claim 1 or 2, **characterized in that**, in the case of a presence sensor (8) signalling that a person has got up out of the driver's seat (1), the signal output (12) indicates a correct use of the safety belt (2) if the belt buckle sensor (7) has signalled briefly beforehand that the belt buckle has been released.

4. Industrial truck according to one of Claims 1 to 3, **characterized in that**, in the case of a presence sensor (8) signalling that a person is sitting down onto the driver's seat (1), the signal output (12) indicates a correct use of the safety belt (2) if at the same time the belt buckle sensor (7) signals an open belt buckle.

5. Industrial truck according to one of Claims 1 to 4, **characterized in that** the control unit (11) is designed in such a manner that brief dischargings of the presence sensor are not taken into consideration in the evaluation.

## Revendications

1. Chariot de manutention avec un siège de conducteur (1) et une ceinture de sécurité (2) associée au siège de conducteur (1), qui présente une fermeture de ceinture et un capteur de fermeture de ceinture (7) détectant l'état de la fermeture de ceinture, le capteur de fermeture de ceinture (7) étant en liaison coopérante avec une unité de commande (11) du chariot de manutention et en outre un capteur de présence (8) détectant la présence d'une personne sur le siège de conducteur (1) étant en liaison coopérante avec l'unité de commande (11), qui est réalisée de telle sorte que l'état et/ou des modifications des signaux produits par le capteur de fermeture de ceinture (7) et le capteur de présence (8) soient détectés et analysés en continu dans l'unité de commande (11), l'unité de commande (11) présentant au moins une sortie de signal (12) qui signale, en fonction du résultat de l'analyse des signaux, une utilisation correcte ou incorrecte de la ceinture de sécurité (2), **caractérisé en ce que** l'unité de commande (11) est réalisée de manière paramétrable, de telle sorte que différents procédés d'analyse des signaux du capteur de fermeture de ceinture et du capteur de présence puissent être ajustés et donc que différents types de limitation d'utilisation du chariot de manutention dans le cas d'une utilisation incorrecte de la ceinture de sécurité (2) puissent être ajustés, un fonctionnement de conduite du chariot de manutention étant alors bloqué lorsque la sortie de signal (12) signale que la ceinture de sécurité (2) n'est pas attachée, ou bien un fonctionnement de conduite du chariot de manutention n'étant possible qu'à une vitesse maximale réduite, et un signal d'avertissement continu étant produit lorsque la sortie de signal (12) signale une fermeture par manipulation de la fermeture de ceinture.

2. Chariot de manutention selon la revendication 1, **caractérisé en ce que** dans le cas d'un capteur de présence (8) signalisant la présence d'une personne, la sortie de signal (12) signale alors une utilisation correcte de la ceinture de sécurité (2) lorsque le capteur de fermeture de ceinture (7) signale simultanément que la fermeture de ceinture est fermée.

3. Chariot de manutention selon la revendication 1 ou 2, **caractérisé en ce que** dans le cas d'un capteur de présence (8) signalant qu'une personne se lève du siège du conducteur (1), la sortie de signal (12) signale alors une utilisation correcte de la ceinture de sécurité (2) si juste avant le capteur de fermeture de ceinture (7) a signalé un desserrage de la fermeture de ceinture.

4. Chariot de manutention selon l'une quelconque des revendications 1 à 3, **caractérisé en ce que** dans le cas d'un capteur de présence (8) signalant qu'une personne s'assoit sur le siège de conducteur (1), la sortie de signal (12) signale alors une utilisation correcte de la ceinture de sécurité (2) si le capteur de fermeture de ceinture (7) signale simultanément que la fermeture de ceinture est ouverte.

5. Chariot de manutention selon l'une quelconque des revendications 1 à 4, **caractérisé en ce que** l'unité de commande (11) est réalisée de telle sorte que de brèves décharges du capteur de présence lors de l'analyse ne sont pas prises en compte.
